# EUROPÄISCHE PATENTSCHRIFT

(11) **EP 3 735 328 B1**
(45) Veröffentlichungstag und Bekanntmachung des Hinweises auf die Patenterteilung: **13.04.2022**
(21) Anmeldenummer: 20707606.8
(22) Anmeldetag: 26.02.2020
(51) Int. Cl.: B21B 38/02, B21B 38/06

(54) **MESSROLLE ZUM FESTSTELLEN EINER EIGENSCHAFT EINES ÜBER DIE MESSROLLE GEFÜHRTEN BANDFÖRMIGEN GUTS**
MEASURING ROLLER FOR DETERMINING A PROPERTY OF A STRIP-LIKE PRODUCT GUIDED OVER THE MEASURING ROLLER
ROULEAU DE MESURE POUR DÉTERMINER UNE PROPRIÉTÉ D'UN PRODUIT EN FORME DE BANDE GUIDÉ SUR LE ROULEAU DE MESURE

(30) Priorität: 26.02.2019 DE 102019001354
(43) Veröffentlichungstag der Anmeldung: 11.11.2020
(60) Teilanmeldung: 21173569.1
(73) Patentinhaber: VDEh-Betriebsforschungsinstitut GmbH, 40237 Düsseldorf (DE)
(72) Erfinder: MÜCKE, Gert, 40724 Hilden (DE); KREMEYER, Julian, 40723 Hilden (DE); KRAMBEER, Hagen, 41363 Jüchen (DE); NEUER, Markus, 40625 Düsseldorf (DE)
(74) Vertreter: Tilmann, Max Wilhelm
(86) Internationale Anmeldenummer: PCT/EP2020/055016
(87) Internationale Veröffentlichungsnummer: WO 2020/174001

(56) Entgegenhaltungen:
- EP-A1- 1 432 537
- EP-A1- 3 009 206
- EP-A2- 0 241 280
- EP-A2- 1 369 186
- DE-A1- 4 236 657
- DE-A1- 19 918 699
- DE-U1-202007 001 066
- JP-A- H07 198 313

## Beschreibung

Die Erfindung betrifft eine Messrolle zum Feststellen einer Eigenschaft eines über die Messrolle geführten bandförmigen Guts, insbesondere von Metallband. Ferner betrifft die Erfindung ein Verfahren zum Herstellen einer Messrolle zum Feststellen einer Eigenschaft eines über die Messrolle geführten bandförmigen Guts, insbesondere von Metallband. Die Erfindung betrifft auch eine Verwendung einer vorgenannten Messrolle.

Messrollen werden beim Kalt- und Warmwalzen von Metallband eingesetzt und sind beispielsweise aus der DE 42 36 657 A1 bekannt.

Beim herkömmlichen Messen der Planheit, insbesondere beim Walzen von Bändern, werden im Wesentlichen Verfahren eingesetzt, bei denen das Band mit einem gewissen Umschlingungswinkel über eine mit Kraftsensoren bestückte Messrolle geführt wird.

Aus DE 42 36 657 A1 ist eine Umlenkmessrolle für die Ermittlung der Spannungsverteilung beim Walzen dünner Bänder bekannt. Die Umlenkmessrolle weist eine zylindrische Messrolle auf, in deren Umfang Messstellen derart angeordnet sind, dass sie den Spannungsverlauf des mit Messstellen versehenen Abschnittes der Messrolle anzeigen. Das zu prüfende Band liegt an der Messrolle sowie an radial belasteten Abdeckungen von Kraftmessgebern im Betriebszustand mit ihren Oberflächen unmittelbar an. Die Abdeckungen sind ausschließlich in den Ausnehmungen in Bezug auf die Achse der Messrolle verschiebbar.

Die Anordnung der Kraftsensoren mit Abstand von der sie umgebenden Wandung und das Verschließen des Ringspalts mit Hilfe eines O-Rings oder eines hinreichend elastischen Kunststoffs (DE 196 16 980 A1) verhindert, dass sich während des Walzens im Korpus der Messrolle wirksame Querkräfte störend auf die Kraftsensoren bzw. das Messergebnis auswirken. Derartige Störkräfte sind die Folge des auf die Messrolle wirkenden Bandzugs und einer damit verbundenen Durchbiegung der Messrolle. Deren Querschnitt nimmt dabei die Form einer Ellipse an, deren längere Achse parallel zum Band verläuft. Die Messrollendurchbiegung täuscht dem Kraftsensor eine Unebenheit des Bandes vor, wenn sie durch Kraftnebenschluss auf den Messgeber übertragen wird. Ein solcher Kraftnebenschluss lässt sich bei der Verwendung einer Dichtung im Ringspalt nicht ganz vermeiden, da die Dichtkräfte zwangsläuft auf den Kraftsensor wirken.

Auf diese Weise kommt es bei der in der DE 42 36 657 A1 beschriebenen Messrolle zu einer Berührung zwischen Kraftmessgebern oder deren Abdeckung, die in zur Messrollenoberfläche offenen radialen Ausnehmungen der Messrolle angeordnet sind, und dem Band. Zwischen den am Boden in der jeweiligen Ausnehmung aufgespannten Kraftsensoren und der sie umgebenden Ausnehmungswandung befindet sich ein zylindrischer Spalt. Dieser Spalt kann mit einem O-Ring schulterdichtend oder mit einer Kunststoffschicht frontdichtend verschlossen sein, um das Eindringen von Schmutz, beispielsweise Bandpartikel und Schmiermittel, in die Ringspalte zwischen Kraftsensor und Messrollenkörper zu verhindern. Auch ist es möglich, wie in der DE 42 36 657 A1 in der Figur 1c dargestellt ist, den Messgeber in einer Ausnehmung der Vollrolle zu platzieren, die dann mit einer angearbeiteten Membran abgedeckt wird. Obwohl die in der DE 42 36 657 A1 beschriebene Messrolle sehr gute Ergebnisse erzielt, haben sich in der Praxis Schwierigkeiten ergeben. Durch den Spalt zwischen der Ausnehmung und der Abdeckung wird verhindert, dass in der Messrolle wirksame Kräfte und Momente über die Abdeckung auf den Kraftsensor wirken. Trotz des Ausfüllens des umlaufenden Spalts mit Dichtwerkstoffen hat sich herausgestellt, dass das bandförmige Gut beeinträchtigt wird, indem sich beispielsweise Schmutz auf das bandförmige Gut von der Messrolle abdrückte.

DE 198 38 457 A1 offenbart eine Messrolle zum Feststellen von Planheitsabweichungen beim Walzen von Metallband. Es sind in Ausnehmungen angeordnete Messgeber vorgesehen. Ein Spalt läuft zwischen den Messgebern und der Wandung der Ausnehmungen um. Ferner ist eine Ummantelung, beispielsweise ein Rollenmantel, vorgesehen. Es hat sich herausgestellt, dass beim Eintragen von Wärme durch das bandförmige Gut in das Rohr oder in die Rohrabschnitte, deren Durchmesser sich aufgrund der Wärmeausdehnung schneller vergrößern als der Messrollenkörper. Durch die Veränderung der Rohrgeometrie kann sich die Kraftübertragung vom bandförmigen Gut auf die Kraftsensoren verändern. Ferner kann sich bei größeren Temperaturdifferenzen zwischen dem Messrollenkörper und der Ummantelung die Verbindung, die zumeist mittels Aufschrumpfen auf den Messrollenkörper aufgebracht ist, lösen. Die Ummantelung bzw. das umhüllende Rohr kann sich gegenüber dem Messrollenkörper verdrehen.

Aus JP-H 7198313 A ist eine Messrolle nach dem Oberbegriff des Anspruchs 1 bekannt. Aus EP 1 369 186 A2 ist eine Messrolle nach dem Oberbegriff des Anspruchs 1 bekannt, bei der eine Ummantelung aus Wolframcarbid oder einer Hartchromschicht vorgesehen ist. Aus EP 3 009 206 A1 ist eine Messrolle nach dem Oberbegriff des Anspruchs 1 bekannt, die eine Beschichtung aus Gummi/Kunststoff oder Wolframcarbid aufweist.

Der Erfindung liegt damit die Aufgabe zugrunde, die Aussagekraft der mittels Messrollen durchgeführten Untersuchungen hinsichtlich der Eigenschaften des über die Messrolle geführten bandförmigen Guts zu erhöhen und/oder eine Beeinflussung des bandförmigen Guts möglichst gering zu halten.

Diese Aufgabe wird durch die Gegenstände der nebengeordneten Ansprüche gelöst. Vorteilhafte Ausführungsformen sind in den Unteransprüchen und der nachfolgenden Beschreibung näher erläutert.

Die Erfindung geht von dem Grundgedanken aus, die Ausnehmung mittels eines Schichtauftrags zumindest im Wesentlichen, vorzugsweise gänzlich, zu überdecken. Es kann ein Fertigungsverfahren verwendet werden, welches eine feste Verbindung zwischen dem Schichtauftrag und dem Messrollenkörper bildet. Bei der sich ergebenden Messrolle kann ein Stoffschluss zwischen dem Schichtauftrag und dem Messrollenkörper vorliegen.

Es wird eine Messrolle zum Feststellen einer Eigenschaft eines über die Messrolle geführten bandförmigen Guts, insbesondere von Metallband, geschaffen. Die Messrolle weist einen Messrollenkörper mit einer Umfangsfläche, mindestens eine Ausnehmung in dem Messrollenkörper, und einen Kraftsensor, der in der Ausnehmung angeordnet ist, auf. Über der Ausnehmung ist ein Schichtauftrag ausgebildet. Der Schichtauftrag kann beispielsweise als Überhang ausgeführt sein, der an den die Ausnehmung umgebenden Oberflächenabschnitten des Messrollenkörpers beginnt und die Ausnehmung überbrückt. Derartige Überhänge sind beispielsweise mittels 3D-Druck herstellbar. Häufig bestehen derartige Überhänge aus mehreren Schichten, bei denen die jeweils untere Schicht weniger über die Ausnehmung ragt, als die nächst obere.

Die jeweils untere Schicht stützt die jeweils nächst obere Schicht und erlaubt ihr, etwas weiter über die Ausnehmung überzustehen.

In einer bevorzugten Ausführungsform ist eine Abdeckung vorgesehen, die die Ausnehmung zumindest teilweise, vorzugsweise gänzlich, verschließt. Bei einer solchen Ausführungsform kann die erfindungsgemäße Anordnung eines Schichtauftrags über der Ausnehmung derart erreicht werden, dass der Schichtauftrag über der Abdeckung ausgebildet wird. In einer bevorzugten Ausführungsform wird der Kraftsensor mittels der Abdeckung in der Ausnehmung verspannt.

Die Erfindung hat demnach erkannt, eine Fertigung eines Umfangsabschnitts der Messrolle, insbesondere eines kompletten Umfangsabschnitts der Messrolle mit einem Verfahren aufzubringen, welches eine möglichst geschlossene Oberfläche über der Ausnehmung ausbildet. Überspannt der Schichtauftrag die Ausnehmung, ohne sich auf weiteren Elementen innerhalb der Ausnehmung, beispielsweise einer Abdeckung, abzustützen, so ist der Schichtauftrag mit dem die Ausnehmung umgebenden Oberflächenabschnitten des Messrollenkörpers fest verbunden. Ist eine Abdeckung oder ein anderes Element in der Ausnehmung vorgesehen, so ist es denkbar, dass der Schichtauftrag fest mit einer Oberfläche der Abdeckung oder dem anderen Element in der Ausnehmung verbunden ist. Es sind sogar Ausführungsformen denkbar, bei denen der Schichtauftrag auf einer Oberfläche des Kraftsensors aufgebaut wird, beispielsweise auf einer Sensorfläche eines Piezoelements. Zum Schutz des Kraftsensors vor Wärmeeintrag kann es vorgesehen sein, den Kraftsensor mit einer Schutzschicht vorzusehen.

Ein Schichtauftrag verursacht beim Herstellungsverfahren bzw. beim Auftragen der Schicht nur einen geringen Wärmeeintrag in den Messrollenkörper. Dieser geringe Wärmeeintrag ist für die in dem Messrollenkörper angeordnete Sensorik in Form der Kraftsensoren bzw. des Kraftsensors unkritisch. Ein Schichtauftrag kann hinsichtlich seiner Höhe variabel gewählt werden und nach den Vorgaben des Anwenders ausgestaltet sein. Bei einem Schichtauftrag ist auch eine variable Ausgestaltung aus einer Kombination von Werkstoffen möglich. Ein Schichtauftrag über der Ausnehmung und/oder der Abdeckung wird durch eine thermische Veränderung im Wesentlichen nicht beeinflusst, so dass eine Messung durch die Kraftsensoren ebenfalls im Wesentlichen nicht behindert bzw. beeinflusst wird.

Die erfindungsgemäße Messrolle weist einen Messrollenkörper auf. Vorzugsweise weist der Messrollenkörper im Wesentlichen eine geschlossene Umfangsfläche auf. In einer bevorzugten Ausführungsform ist der Messrollenkörper eine Vollrolle, die sich entlang einer Längsachse erstreckt.

Die Erfindung lehrt, dass die erfindungsgemäße Messrolle einen Messrollenkörper mit einer Umfangsfläche aufweist sowie einen über der Ausnehmung (und in einer bevorzugten Ausführungsform über einer in einer bevorzugten Ausführungsform vorgesehenen Abdeckung) ausgebildeten Schichtauftrag. Der Messrollenkörper wird damit zum Grundkörper, auf dessen Umfangsfläche der Schichtauftrag ausgeführt wird. Es sind Ausführungsformen denkbar, bei denen der Schichtauftrag nur im Bereich der Ausnehmung auf der Umfangsfläche des Messrollenkörpers aufgetragen wird. Nach dem Auftrag des Schichtauftrags würde die Messrolle somit Oberflächenabschnitte aufweisen, die durch die Umfangsfläche des Messrollenkörpers gebildet würden (in den Bereichen, in denen auf die Umfangsfläche des Messrollenkörpers kein Schichtauftrag aufgetragen wurde), und Oberflächenabschnitte aufweisen, die durch die nach außen weisende Oberfläche des Schichtauftrags gebildet werden. Derartige Ausführungsformen haben den Vorteil, dass sie günstiger hergestellt werden können, weil der Schichtaufbau nicht über die gesamte Umfangsfläche des Messrollenkörpers aufgebaut werden muss. Es sind Ausführungsformen denkbar, bei denen die Umfangsfläche des Messrollenkörpers vor dem Aufbau des Schichtauftrags nicht durchgängig zylinderförmig ist, sondern im Bereich der Ausnehmung eine Senke aufweist, die die Ausnehmung umgibt. Der Schichtauftrag kann dann in dieser Senke ausgeführt werden, im Grund der Senke in Kontakt mit dem dort befindlichen Teil der Umfangsfläche der Messrolle gebracht werden und so aufgebaut werden, dass der Schichtaufbau die Tasche gänzlich füllt, so dass die Messrolle nach dem Auftrag des Schichtaufbaus (und ggf. nachfolgender Arbeiten, wie eines Abschleifens zur Bearbeitung der Übergänge) eine geschlossene, vorzugsweise zylindrische Oberfläche hat. In einer bevorzugten Ausführungsform wird der Schichtaufbau jedoch auf die gesamte Umfangsfläche des Messrollenkörpers aufgetragen. Die Außenoberfläche der Messrolle wird in einem solchen Ausführungsbeispiel nach dem Auftrag des Schichtaufbaus gänzlich durch die nach außen weisende Oberfläche des Schichtaufbaus gebildet. In einer bevorzugten Ausführungsform hat die Messrolle nach dem Aufbringen des Schichtaufbaus eine geschlossene Umfangsfläche.

In einer bevorzugten Ausführungsform ist der Messrollenkörper zylinderförmig ausgeführt. Unter einer Vollrolle wird ein Messrollenkörper verstanden, der einstückig ist und dessen Form entweder mit einem Urformverfahren, beispielsweise Gießen, hergestellt wurde, und/oder dessen geometrische Form durch Trennverfahren, insbesondere durch Zerspanen, insbesondere durch Drehen, Bohren, Fräsen oder Schleifen aus einem einstückigen Halbzeug hergestellt wird. Es ist auch denkbar, dass der Messrollenkörper selbst aus einem Schichtauftrag hergestellt wird und der Messrollenkörper selbst, beispielsweise durch eines der in dieser Beschreibung beschriebenen Verfahren für einen Schichtauftrag, beispielsweise durch ein 3D-Druckverfahren, hergestellt wird. In einer bevorzugten Ausführungsform sind bei einem solchen als Vollrolle ausgebildeten Messrollenkörper auch die jeweils stirnseitig an der Messrolle angeordneten Messrollenzapfen zur drehbaren Lagerung der Messrolle, beispielsweise in Kugellagern, Teil des einstückigen Messrollenkörpers. Es sind jedoch auch Bauformen, wie sie beispielsweise in Figur 2 der DE 20 2014 006 820 U1 dargestellt werden, denkbar, bei denen der Hauptteil des Messrollenkörpers als zylinderförmige Vollrolle ausgeführt wird, die stirnseits angeordnete Deckel aufweist, an denen die Messrollenzapfen ausgeführt sind.

In einer bevorzugten Ausführungsform weist der Messrollenkörper eine geschlossene Umfangsfläche bis auf die Ausnehmungen auf und wird stirnseitig jeweils durch eine Stirnseite abgeschlossen, in der insbesondere mindestens eine Kabeldurchführung bzw. ein Kabelkanal vorgesehen sein kann. Es kann vorgesehen sein, dass außer der Kabeldurchführung bzw. dem Kabelkanal keine weitere Öffnung in der Stirnseite vorhanden sind. In einer bevorzugten Ausführungsform sind die Stirnseiten im Winkel von 90° zur Umfangsfläche angeordnet.

In einer bevorzugten Ausführungsform weist die Messrolle Lagerzapfen auf. In einer bevorzugten Ausführungsform sind die Lagerzapfen bei Ausführungsformen der Messrolle mit Stirnseiten an den Stirnseiten ausgebildet.

In dem Messrollenkörper der erfindungsgemäßen Messrolle ist mindestens eine Ausnehmung vorgesehen. Es hat sich gezeigt, dass die Vorzüge der Erfindung bereits mit einer einzigen Ausnehmung im Messrollenkörper erreicht werden können. So ist es bei der Planheitsmessung denkbar, eine Information über die Planheit des über die Messrolle geführten bandförmigen Guts einmal pro Umdrehung der Messrolle bereitzustellen.

In einer bevorzugten Ausführungsform weist der Messrollenkörper mehrere Ausnehmungen auf. In einer bevorzugten Ausführungsform sind die Ausnehmungen im gleichen radialen Abstand zur Längsachse des messbaren Körpers ausgeführt. In einer bevorzugten Ausführungsform sind alle Ausnehmungen in Umfangsrichtung äquidistant zueinander verteilt angeordnet. Es sind aber auch Ausführungsformen denkbar, bei denen eine erste Gruppe von Ausnehmungen vorgesehen ist, die insbesondere bevorzugt den gleichen radialen Abstand zur Längsachse aufweisen und in Umfangsrichtung äquidistant verteilt angeordnet sind, und bei denen zusätzlich zu dieser ersten Gruppe von Ausnehmungen zumindest eine weitere Ausnehmung (in Form einer weiteren Gruppe) vorgesehen ist, die entweder bzgl. eines radialen Abstands zur Längsachse anders ausgeführt ist, als die Ausnehmungen der ersten Gruppe und/oder nicht den gleichen Abstand in Umfangsrichtung zu den übrigen Ausnehmungen aufweist, wie die übrigen Ausnehmungen zueinander aufweisen.

Die Ausnehmung in dem Messrollenkörper kann vor dem Aufbringen des Schichtauftrags von einer Umfangsfläche des Messrollenkörpers zugänglich sein. Die Ausnehmung kann ferner einen Zugang aufweisen, der als Kabelkanal oder Kabeldurchführung ausgestaltet sein kann. Der Kabelkanal oder die Kabeldurchführung kann sich insbesondere abschnittsweise im Wesentlichen in Richtung der Längsachse des Messrollenkörpers bzw. im Wesentlichen parallel versetzt zu dieser erstrecken. Der Kabelkanal oder die Kabeldurchführung kann im Bereich der Stirnseiten der Messrolle bzw. des Messrollenkörpers einen Abschnitt aufweisen, der im Wesentlichen quer zur Längsachse der Messrolle verläuft. Die Ausnehmung kann damit derart ausgerichtet sein, dass sie quer zur Längsachse des Messrollenkörpers angeordnet ist. In einer bevorzugten Ausführungsform schließt die Längsrichtung der Ausnehmung mit der Längsrichtung des Messrollenkörpers einen Winkel ein, der größer als 60°, insbesondere bevorzugt größer als 70°, insbesondere bevorzugt größer als 75°, insbesondere bevorzugt größer als 80°, insbesondere bevorzugt größer als 85° ist. In einer bevorzugten Ausführungsform steht die Längsrichtung der Ausnehmung senkrecht zur Längsachse des Messrollenkörpers. In einer bevorzugten Ausführungsform sind die Ausnehmungen als radial verlaufende Ausnehmungen ausgeführt. Die Ausnehmungen können als Taschen, wie sie beispielsweise in DE 198 38 457 A1 dargestellt sind, ausgeführt sein. Bei diesen Ausführungsformen können die radial verlaufenden Ausnehmungen in ihrem Querschnitt so groß ausgeführt sein, dass sie mehrere Kraftsensoren aufnehmen können. Insbesondere bei der Aufnahme mehrerer Kraftsensoren in einer Ausnehmung können die Kraftsensoren im Wesentlichen quer zur Umfangsrichtung angeordnet werden. Alternativ oder zusätzlich kann eine Ausnehmung vorgesehen sein, in der genau ein Kraftsensor vorgesehen ist.

Der Begriff "Kraftsensor" im Sinne der Beschreibung umfasst einen Sensor, der eine Sensorfläche aufweist, und derart ausgeführt ist, dass er bei einer Änderung der Lage der Sensorfläche ein Sensorsignal erzeugen kann. Ein Kraftsensor im Sinne der Beschreibung weist meist ein ihm zugehöriges Bezugssystem auf und reagiert auf Änderungen der Lage der Sensorfläche in diesem Bezugssystem. Der Kraftsensor kann ein Gehäuse aufweisen. Das Bezugssystem ist dann häufig das Gehäuse. Der Kraftsensor kann bei einer Ausführungsform mit Gehäuse beispielsweise feststellen, ob sich die Lage der Sensorfläche relativ zu dem Gehäuse geändert hat. Ist der Kraftsensor beispielsweise als piezo-elektrischer Kraftsensor ausgeführt, so weist er einen Piezo-Quarz auf, der ein elektrisches Signal erzeugen kann, wenn die Lage einer seiner Oberflächen relativ zu einer Bezugsfläche, beispielsweise einer gegenüberliegenden Oberfläche des Piezo-Quarzes, geändert wird, demnach der Piezo-Quarz beispielsweise zusammengedrückt wird. Bei einem als Dehnungsmessstreifen ausgeführten Kraftsensor wird durch eine Lageänderung der Oberfläche des Kraftsensors die Länge des Messdrahts bzw. des aus Messdrähten gebildeten Messgitters geändert, meist gestreckt, teilweise auch gestaucht. Bei einem als optischen Kraftsensor ausgestalteten Kraftsensor werden die optischen Eigenschaften des Kraftsensors, beispielsweise der Brechungsindex oder Reflektionseigenschaften, durch die Lageänderung der Oberfläche geändert.

Es sind Ausführungsformen denkbar, bei denen die Sensorfläche des Kraftsensors eine Oberfläche des Kraftsensors ist oder die Sensorfläche eine Oberfläche des im Kraftsensor verwendeten Elements ist, dessen Eigenschaften zur Erzeugung des Sensorsignals geändert werden, beispielsweise eine Oberfläche des Piezo-Quarzes selbst.

Häufig sind bei derartigen Kraftsensoren jedoch Zwischenstücke vorgesehen, an denen die Sensorfläche ausgebildet ist. Häufig sind derartige Zwischenstücke starre Blöcke, bei denen eine Veränderung der Lage der einen Oberfläche des starren Blocks aufgrund der Starrheit des Blockes unmittelbar zu einer Veränderung der Lage der gegenüberliegenden Fläche führt. Derartige Zwischenstücke können dazu eingesetzt werden, die Sensorfläche von übrigen Teilen des Kraftsensors, insbesondere von einem Gehäuse, überstehend auszubilden. Durch eine gegenüber anderen Teilen des Kraftsensors überstehende Sensorfläche wird die Messgenauigkeit erhöht, weil eine klar definierte Fläche geschaffen wird, auf die die Umgebung einwirken kann. Durch überstehende Sensorflächen können beispielsweise Messfehler durch Kraftnebenschluss verhindert werden. Ein möglicher zu verwendender Kraftsensor ist in DE 1 773 551 A1 beschrieben und weist ein in einem Gehäuse angeordnetes, aus einer mehrschichtigen Kristallanordnung bestehendes Piezo-Element auf, das zwischen zwei Kraftübertragungsscheiben angeordnet ist. Bei einer derartigen Ausführung des Kraftsensors wäre die Sensorfläche die Außenoberfläche der in Figur 1 der DE 1 773 551 A1 oberen Kraftübertragungsscheibe oder die Außen-oberfläche der in Figur 1 der DE 1 773 551 A1 unteren Kraftübertragungsscheibe.

In einer bevorzugten Ausführungsform ist die Sensorfläche eben ausgeführt. In einer bevorzugten Ausführungsform weist die Flächennormale einer ebenen Sensorfläche des Kraftsensors in Richtung auf die Umfangsfläche. Die Flächennormale einer ebenen Sensorfläche des Kraftsensors kann mit einer Radialen des Messrollenkörpers hinsichtlich des Punkts der Sensorfläche, an dem die Sensorfläche von der Radialen geschnitten wird, einen Winkel kleiner als 45°, insbesondere bevorzugt kleiner als 20°, insbesondere bevorzugt kleiner als 10°, insbesondere bevorzugt kleiner als 5° einschließen.

In einer bevorzugten Ausführungsform ist die Sensorfläche des Kraftsensors symmetrisch bzgl. der Ebene ausgeführt, die die Längsachse des Messrollenkörpers schneidet und die die Sensorfläche des Kraftsensors schneidet und in der auch eine Flächennormale der Sensorfläche liegt.

In einer bevorzugten Ausführungsform ist die Sensorfläche ringförmig, insbesondere kreisringförmig, ausgeführt. Ebenso bevorzugt werden Ausführungsformen, bei denen die Sensorfläche kreisförmig oder elliptisch ausgeführt ist. Rechteckige, quadratische oder polygone Sensorflächen sind möglich. In einer bevorzugten Ausführungsform ist die Sensorfläche eben ausgeführt.

In einer bevorzugten Ausführungsform ist die Sensorfläche eine von übrigen Elementen des Kraftsensors hervorgehobene Fläche, die in Kontakt mit einer Begrenzungsfläche der Ausnehmung steht bzw. die in Kontakt mit einer die Ausnehmung zur Umfangsfläche hin zumindest teilweise verschließenden Abdeckung steht.

Es ist auch denkbar, dass der Kraftsensor selbst aus einem Schichtauftrag hergestellt wird und der Kraftsensor selbst, beispielsweise durch eines der in dieser Beschreibung beschriebenen Verfahren für einen Schichtauftrag, beispielsweise durch ein 3D-Druckverfahren, hergestellt wird.

In einer bevorzugten Ausführungsform sind zumindest zwei in der Messrolle eingesetzte Kraftsensoren, insbesondere bevorzugt die Mehrzahl der in der Messrolle eingesetzten Kraftsensoren, insbesondere bevorzugt alle in der Messrolle eingesetzten Kraftsensoren, gleichartig ausgeführt, mithin vom gleichen Typ und insbesondere von der gleichen Baureihe.

Bei der "Abdeckung" handelt es sich im Sinne der Beschreibung um ein Bauelement, das oberhalb des in der Ausnehmung angeordneten Kraftsensors angeordnet ist. Die Abdeckung kann in körperlichem Kontakt zu dem Kraftsensor stehen. Es sind aber auch Ausführungsformen denkbar, in denen die Abdeckung beabstandet vom Kraftsensor angeordnet ist, beispielsweise beim Einsatz optischer Messmethoden, bei denen zur Ermittlung der einwirkenden Kraft eine durch die einwirkende Kraft induzierte Verformung der Abdeckung, bzw. eine durch die einwirkende Kraft induzierte Lageänderung der Abdeckung beobachtet wird. In einer bevorzugten Ausführungsform kann die Abdeckung mit Spalt gegenüber der Ausnehmungswand in der Ausnehmung angeordnet werden. Die Abdeckung kann sich damit in der Ausnehmung befinden; die Abdeckung kann derart angeordnet sein, dass diese Abdeckung innerhalb der Ausnehmung angeordnet ist, ohne aus der Ausnehmung vorzustehen. Die Abdeckung kann insbesondere mittels einer Spannschraube in der Ausnehmung fixiert sein. Ein als Ring ausgebildeter Kraftsensor kann dabei die Spannschraube umgeben. Die "Abdeckung" kann auch ein Deckel sein, der die Ausnehmung zumindest teilweise, vorzugsweise ganz verschließt und der mit einem Rand auf einem Rand der Ausnehmung aufliegt. Es steht jedoch zu erwarten, dass ein solcher Deckel die Krafteinleitung von radial wirkenden Kräften beeinflusst, so dass Ausführungsformen bevorzugt werden, bei denen sich die Abdeckung nicht oder nur mittelbar über ein elastisches Element, beispielsweise eine Dichtung, am Rand der Ausnehmung abstützt.

In einer bevorzugten Ausführungsform ist die Abdeckung aus einem anderen Material als die Schicht des Schichtaufbaus, die an die Abdeckung angrenzt.

Ein "Schichtauftrag" im Sinne der Beschreibung umfasst einen Materialauftrag, mittels dem eine Schicht, insbesondere aus Metall, zunächst punktweise, linienweise bzw. spaltenweise und/oder rasterweise aufgetragen werden kann, um ein dreidimensionales Objekt in Form einer Schicht bzw. mehrerer Schichten übereinander auszubilden. Beim Schichtauftrag kann die Schicht, die momentan aufgetragen wird, mit einer darunterliegenden Schicht oder dem Messrollenkörper, sofern die Schicht die erste ist, die auf den Messrollenkörper aufgetragen wird, fest verbunden werden. Der Materialauftrag kann schichtweise computergesteuert aus einem oder mehreren flüssigen oder festen Werkstoffen nach vorgegebenen Maßen und Formen erfolgen. Beim Materialauftrag können physikalische oder chemische Härtungs- oder Schmelzprozesse stattfinden. Mittels des Schichtauftrags kann eine geschlossene im Wesentlichen glatte Oberfläche erzeugt werden. Der Schichtauftrag kann aus einer einzigen Schicht bestehen. Eine einzige Schicht kann dadurch erzeugt werden, dass sie einmal punktweise, linienweise bzw. spaltenweise und/oder rasterweise aufgetragen wird. Bei einem solchen Aufbau wird auf einer einmal erzeugten ersten Schicht keine weitere Schicht punktweise, linienweise bzw. spaltenweise und/oder rasterweise aufgetragen. In einer bevorzugten Ausführungsform besteht der Schichtaufbau jedoch aus mehreren Schichten, die vorzugsweise nacheinander hergestellt wurden. Unter "punktweise" wird das Aufbringen einer Schicht, bzw. eines Teils einer Schicht mit einem Arbeitsgang verstanden, der keine Relativbewegungen entlang der Umfangsfläche des Messrollenkörpers beinhaltet. Der Begriff "punktweise" ist nicht als eine Beschränkung der Größe der Schicht, bzw. des Teils der Schicht, die, bzw. der mit diesem Arbeitsgang aufgebracht wird, zu verstehen. "Punktweise" kann auch das Auftragen einer großflächigen Schicht, bzw. eines großflächigen Teils einer Schicht bedeuten, solange dieser Arbeitsschritt ohne Relativbewegungen entlang der Umfangsfläche des Messrollenkörpers möglich ist.

In einer bevorzugten Ausführungsform ist der Schichtauftrag in direktem Kontakt mit der Abdeckung. Der Schichtauftrag kontaktiert die Abdeckung direkt. Hierdurch kann insbesondere ein Stoffschluss zwischen der Abdeckung und dem Schichtauftrag vorliegen. Es kann eine Ausführungsform gebildet werden, bei der außer dem Schichtauftrag nichts über der Abdeckung ist. Es kann eine Ausführungsform gebildet werden, bei der außer dem Schichtauftrag nichts über der Ausnehmung ist, also auch keine Abdeckung.

Bei einer Eigenschaft eines über die Messrolle geführten bandförmigen Guts kann es sich insbesondere um die Planheit des bandförmigen Guts handeln.

Das bandförmige Gut kann insbesondere ein Metallband sein, welches insbesondere beim Kalt- oder Warmwalzen des Metallbands, über die Messrolle geführt werden kann. Die Messrolle kann auch in einer Weiterverarbeitungslinie angeordnet sein, wie z.B. Nachwalzgerüst (Dressiergerüst), Bandglühlinie, Verzinkungslinie oder Streck-Biege-Richtanlage.

Der Schichtauftrag über der Ausnehmung ist mittels eines Extremhochgeschwindigkeitslaserauftragsschweißens (EHLA) gebildet. Hierdurch ist ein Schichtauftrag mittels einer additiven Fertigung auf Basis von 3D-Modellen möglich. Sofern Beispiele für die Fertigung des Schichtauftrags genannt werden, so umfasst diese additive Fertigung auf Basis von 3D-Modellen einen Freistrahl-Bindemittelauftrag, einen Materialauftrag mit gerichteter Energieeinbringung, eine Materialextrusion, einen Freistrahl-Materialauftrag, ein pulverbettbasiertes Schmelzen, eine Schichtlaminierung, eine badbasierte Fotopolymerisation und Kombinationen der vorgenannten Verfahren. Die Ausnehmung allein oder die Ausnehmung mit der Abdeckung und dem Kraftsensor kann damit zumindest teilweise verschlossen, vorzugsweise ganz verschlossen werden. Die genannten Verfahren bieten den Vorteil, dass eine Materialzuführung für den Schichtauftrag mit Hilfe von Linearachsen oder einem Roboter über den Messrollenkörper bewegt werden kann. Hierbei kann ein Materialmix oder im Wesentlichen ein reines Material verwendet werden. Die Erzeugung einer Schmelze ist möglich. Insbesondere kann mittels des Laser- oder Elektronenstrahls eine Schmelze des zugeführten Materials erzeugt werden, die auf dem Messrollenkörper bzw. auf über dem Messrollenkörper schon vorliegenden Schichten aufgetragen werden. Es kann vorgesehen sein, dass das Material zum Schichtauftrag als Pulver mit einem Schutzgasstrom oder mittels Drahtvorschub in den Bereich gefördert wird, in dem eine Materialschmelze erzeugt wird. Insbesondere kann mittels der genannten Verfahren ein Fügeprinzip durchgeführt werden, welches insbesondere ein Schmelzschweißen ist. Ein Stoffschluss ist hierdurch möglich.

Der Schichtauftrag im Sinne der Beschreibung kann in einer bevorzugten Ausführungsform insbesondere dadurch ausgezeichnet sein, dass die in der Beschreibung genannten Verfahren durch Ansteuerung mit 3D-Daten in entsprechend ausgestalteten Anlagen als 3D-Druckverfahren eingesetzt werden.

In einer bevorzugten Ausführungsform ist die erste, bzw. soweit nur eine einzige Schicht vorhanden ist: die einzige Schicht des Schichtauftrags mit dem Messrollenkörper verbunden, so dass eine stabile Verbindung zwischen dem Messrollenkörper und dem Schichtauftrag vorliegen kann. Die Verbindung kann durch einen der folgenden Wirkmechanismen oder durch eine Kombination der folgenden Wirkmechanismen erzielt werden: Mechanische Verklammerung auf der molekularen Ebene, Adhäsion, Diffusionsvorgänge, Oberflächenenergie und/oder elektrostatische Kräfte. Mittels eines Schweißens ist eine stabile Fügeverbindung zwischen dem Schichtauftrag, hier der ersten Schicht über dem Messrollenkörper, möglich.

In einer bevorzugten Ausführungsform sind zumindest einige der Schichten (soweit der Schichtauftrag mehrere Schichten aufweist) des Schichtauftrags miteinander verbunden, insbesondere verschweißt, so dass auch eine stabile Verbindung des Schichtauftrags selbst möglich ist. Hierdurch kann verhindert werden, dass bei einer thermisch induzierten Veränderung der Messrollengeometrie ein Ablösen stattfindet.

In einer bevorzugten Ausführungsform weist der Schichtauftrag mindestens ein schweißgeeignetes Metall, mindestens eine schweißgeeignete Legierung und/oder keramische Verstärkungspartikel auf. Durch eine geeignete Wahl des Materials für den Schichtauftrag kann den Anforderungen an die Messrolle entsprochen werden und/oder eine gute thermische Stabilität bei gleichzeitig guten Herstellungsmöglichkeiten berücksichtigt werden. Insbesondere bevorzugt sind Metalle mit hoher Festigkeit und Zähigkeit. Insbesondere bevorzugt sind Eisen, Kobalt, Nickel, Chrom, Molybdän, Vanadium und deren Legierungen, beispielsweise eine Chrom-Molybdän-Legierung (CrMo), beispielsweise 42CrMo4, oder eine Chrom-Molybdän-Vanadium-Legierung (CrMoVa), beispielsweise 86CrMoV7 oder beispielsweise eine Wolfram-Nickel-Chrom-Legierung (WCNiCr).

In einer bevorzugten Ausführungsform weist der Schichtauftrag Schichten unterschiedlicher Zusammensetzung übereinander auf, so dass unterschiedliche Anforderungen an die Schichten hinsichtlich ihrer Lage am Messrollenkörper berücksichtigt werden können. Beispielsweise können die Schicht oder die mehreren Schichten direkt über der Ausnehmung mit dem gleichen Werkstoff ausgebildet sein, der insbesondere der gleiche oder ein ähnlicher Werkstoff wie der Werkstoff für den Messrollenkörper sein kann. Eine Schicht oder mehrere Schichten über der Schicht des Schichtauftrags, die unmittelbar über der Ausnehmung angeordnet sind, können mittels eines hochverschleißarmen Werkstoffs ausgebildet sein. Insbesondere bevorzugt sind Siliciumcarbid, Wolframcarbid, Titancarbid, Tantalcarbid und/oder Chromcarbid.

In einer bevorzugten Ausführungsform werden die Schichten eines gemäß einer bevorzugten Ausführungsform mehrschichtigen Schichtaufbaus auf gleiche Weise hergestellt. Es sind aber auch Ausführungsformen denkbar, bei denen die Schichten eines gemäß einer bevorzugten Ausführungsform mehrschichtigen Schichtaufbaus durch unterschiedliche Herstellungsmethoden erzeugt werden, bzw. eine Gruppe von ersten Schichten nach einem ersten und eine Gruppe von zweiten Schichten nach einem zweiten Herstellungsverfahren hergestellt werden. Ein derartiger Ansatz bietet sich insbesondere dann an, wenn die Schichten verschiedenartig sind, beispielsweise aus verschiedenen Materialien hergestellt werden und sich das jeweils eine Herstellungsverfahren besonders gut für das Erzeugen einer ersten Schicht eignet, während ein anderes Herstellungsverfahren sich besonders gut für das Erzeugen einer zweiten, im Verhältnis zur ersten Schicht andersartigen Schicht eignet. Beispielsweise ist es denkbar, mit einem ersten Herstellungsverfahren eine Schicht aufzutragen, deren Material dem des Messrollenkörpers entspricht oder zumindest gleichartig, beispielsweise metallisch ist, während mit einem anderen Herstellungsverfahren als weitere Schicht des Schichtaufbaus eine Schutzschicht aufgetragen wird, beispielsweise eine Kunststoffschicht oder eine Gummischicht aufgetragen wird. Es ist auch denkbar, eine Schutzschicht aus Wolframcarbid als äußerste Schicht aufzutragen.

In einer bevorzugten Ausführungsform ist bei Ausführungsformen, bei denen der Schichtaufbau nur eine Schicht aufweist die einzige Schicht des Schichtaufbaus aus einem metallischen Material oder aus einem keramischen Material. In einer bevorzugten Ausführungsform ist bei Ausführungsformen, bei denen der Schichtaufbau mehrere Schichten aufweist die Schicht des Schichtaufbaus, die dem Messrollenkörper am nächsten ist (die unterste Schicht; die innerste Schicht) aus einem metallische Material oder aus einem keramischen Material.

In einer bevorzugten Ausführungsform ist bei Ausführungsformen, bei denen der Schichtaufbau nur eine Schicht aufweist die einzige Schicht des Schichtaufbaus, bzw. bei Ausführungsformen, bei denen der Schichtaufbau mehrere Schichten aufweist zumindest die Schicht des Schichtaufbaus, die dem Messrollenkörper am nächsten ist (die unterste Schicht; die innerste Schicht), hinsichtlich seiner Materialeigenschaften, insbesondere hinsichtlich des Ausdehnungskoeffizienten und/oder hinsichtlich der Zugfestigkeit auf das Material des Messrollenkörpers abgestimmt. Insbesondere bevorzugt ist bei Ausführungsformen, bei denen der Schichtaufbau nur eine Schicht aufweist, bei der einzigen Schicht des Schichtaufbaus, bzw. bei Ausführungsformen, bei denen der Schichtaufbau mehrere Schichten aufweist, zumindest bei der Schicht des Schichtaufbaus, die dem Messrollenkörper am nächsten ist (die unterste Schicht; die innerste Schicht),
- das Material so gewählt, dass der in 10⁻⁶/K gemessene Ausdehnungskoeffizient des Materials nicht weniger als das 0,5fache, insbesondere bevorzugt nicht weniger als das 0,6fache, insbesondere bevorzugt nicht weniger als das 0,7fache, insbesondere bevorzugt nicht weniger als das 0,8fache, insbesondere bevorzugt nicht weniger als das 0,9fache des in 10⁻⁶/K gemessenen Ausdehnungskoeffizient des Materials des Messrollenkörpers ist (ist der Messrollenkörper aus Stahl, so liegt der in 10⁻⁶/K gemessene Ausdehnungskoeffizient in etwa im Bereich von 11 bis 13 10⁻⁶/K; das Material der einzigen, bzw. der untersten/innersten Schicht sollte in einer bevorzugten Ausführungsform dann einen in 10⁻⁶/K gemessenen Ausdehnungskoeffizient haben, der nicht unter 5,5 10⁻⁶/K (dem 0,5fachen von 11) liegt, und/oder
- das Material so gewählt, dass der in 10⁻⁶/K gemessene Ausdehnungskoeffizient des Materials nicht weniger 9 10⁻⁶/K, vorzugsweise nicht weniger als 10 10⁻⁶/K beträgt, und/oder
- das Material so gewählt, dass die in MPa gemessene Zugfestigkeit des Materials nicht weniger als das 0,7fache, insbesondere bevorzugt nicht weniger als das 0,8fache, insbesondere bevorzugt nicht weniger als das 0,9fache der in MPa gemessenen Zugfestigkeit des Materials des Messrollenkörpers ist (ist der Messrollenkörper aus Stahl, so liegt die MPa gemessene Zugfestigkeit in etwa im Bereich von 700 bis 1100 MPa; das Material der einzigen, bzw. der untersten/innersten Schicht sollte in einer bevorzugten Ausführungsform dann eine in MPa gemessene Zugfestigkeit haben, die nicht unter 490 MPa (dem 0,7fachen von 700) liegt, und/oder
- das Material so gewählt, dass die in MPa gemessene Zugfestigkeit des Materials nicht weniger als 600 MPa, vorzugsweise nicht weniger als 650 MPa beträgt.

Dabei beziehen sich die vorstehend genannten Materialeigenschaften auf die Schicht im aufgetragenen Zustand. Mit den vorstehend wiedergegebenen Auslegungsregeln für das Material der Schicht im auf den Messrollenkörper aufgebrachten Zustand kann erreicht werden, dass die Schicht - insbesondere im Bereich der Ausnehmung - nicht brüchig wird oder abplatzt.

Es sind Ausführungsformen denkbar, bei denen die Schichten eines gemäß einer bevorzugten Ausführungsform mehrschichtigen Schichtaufbaus eine unterschiedliche Erstreckung aufweisen. Beispielsweise ist es denkbar, dass ein Messrollenkörper eine Senke um die Ausnehmung herum aufweist, die durch Auftragen einer ersten Schicht, bzw. einer ersten Gruppe von Schichten gefüllt wird. Diese erste Schicht, bzw. diese erste Gruppe von Schichten hat dann die geometrische Form der Senke. Aufbauend auf dieser ersten Schicht, bzw. dieser ersten Gruppe von Schichten kann der Schichtaufbau dann eine zweite Schicht oder eine zweite Gruppe von Schichten aufweisen, die eine größere Erstreckung als die Senke haben, beispielsweise die gesamte verbleibende Umfangsfläche des Messrollenkörpers inkl. der Umfangsfläche der mit der ersten Schicht/der ersten Gruppe von Schichten gefüllten Senke abdecken.

Es sind Ausführungsformen denkbar, bei denen die Schicht des Schichtaufbaus (soweit der Schichtaufbau nur eine Schicht aufweist), bzw. zumindest eine Schicht, insbesondere bevorzugt mehrere, insbesondere bevorzugt die Mehrzahl, insbesondere bevorzugt alle Schichten eines mehrschichtigen Schichtaufbaus eine gleiche Schichtstärke aufweisen. Alternativ sind Ausführungsformen denkbar, bei denen die Schicht des Schichtaufbaus (soweit der Schichtaufbau nur eine Schicht aufweist), bzw. zumindest eine Schicht, insbesondere bevorzugt mehrere, insbesondere bevorzugt die Mehrzahl, insbesondere bevorzugt alle Schichten eines mehrschichtigen Schichtaufbaus eine sich über die Erstreckung der Schicht ändernde Schichtstärke aufweisen, beispielsweise eine Stufe oder einen Vorsprung aufweisen. Beispielsweise ist eine Ausführungsform denkbar, bei der in der Ausnehmung eine zurückgesetzt angeordnete Abdeckung vorgesehen ist und mit der ersten Schicht sowohl der verbleibende Raum oberhalb der Abdeckung in der Ausnehmung gefüllt wird, als auch mit der gleichen Schicht die Umfangsfläche des Messrollenkörpers mit einer gleichmäßig dicken Schicht abgedeckt wird. Diese Schicht hätte somit im Bereich der übrigen Umfangsfläche des Messrollenkörpers eine konstante Dicke, hätte aber im Bereich der Ausnehmung einen Vorsprung (eine erhöhte Schichtdicke), um den verbleibenden Raum der Ausnehmung oberhalb der Abdeckung abzudecken. Es sind auch Ausführungsformen denkbar, bei denen die erste, dem Messrollenkörper als nächstes angeordnete Schicht dazu genutzt wird, bei einem Messrollenkörper mit einer nicht formgerechten, beispielsweise nicht zylindrischen Umfangsfläche, eine formgerechte, beispielsweise zylindrische Umfangsfläche zu schaffen.

Mittels des Schichtauftrags kann die sich ergebende Messrolle aus Messrollenkörper und aufgebrachten Schichtauftrag als "Vollrolle" betrachtet werden. Insbesondere wenn als Material für den Schichtauftrag das gleiche Material wie für den Messrollenkörper gewählt wird, so kann ein fließender Übergang von dem Messrollenkörper zum Schichtauftrag vorliegen, so dass insbesondere keine Systemgrenze als scharfe Grenze zwischen dem Messrollenkörper und dem Schichtauftrag vorliegt. Es kann insbesondere vorgesehen sein, dass der Schichtauftrag an das atomare Gitter des Messrollenkörpers anbindet, so dass zumindest in dem Bereich zwischen einem Schichtauftrag, der das gleiche Material wie der Messrollenkörper aufweist, keine scharfe Grenze zu sehen ist.

Der Schichtauftrag kann in einer bevorzugten Ausführungsform zur Anbindung an den Messrollenkörper das gleiche Material wie der Messrollenkörper aufweisen. Es kann vorgesehen sein, dass sich in der Höhe des Schichtauftrags das Material ändert, um unterschiedlichen Anforderungen gerecht zu werden.

In einer bevorzugten Ausführungsform ist der Schichtauftrag über der Abdeckung spaltlos zumindest in einer Richtung über der Ausnehmung ausgebildet. Hierdurch kann eine möglichst geschlossene Fläche über der Abdeckung erzeugt werden, so dass im Wesentlichen keine Partikel, insbesondere Schmutz, in die Ausnehmung gelangen kann. In einer besonders bevorzugten Ausführungsform ist der Schichtauftrag über der Abdeckung gesamthaft spaltlos, so dass kein derartiger Spalt über der Abdeckung vorliegt, wie der Spalt, der zwischen der Abdeckung und der Ausnehmungswand vorliegt.

In einer bevorzugten Ausführungsform können in Längsrichtung des messbaren Körpers auf dem Messrollenkörper mehrere unterschiedliche Schichtaufträge und/oder Umhüllungen vorliegen. Gemäß dieser bevorzugten Ausführungsform kann vorgesehen sein, dass im Bereich von Ausnehmungen ein Schichtauftrag vorliegt, aber beispielsweise dort, wo keine Ausnehmung vorgesehen ist, ein anderer Schichtauftrag bzw. eine andere Form der Umhüllung vorliegt. Damit kann auf die besonderen Anforderungen über einer Ausnehmung reagiert werden. Sofern Bereiche in der Messrolle vorgesehen sind, die in Längsrichtung oder quer zur Längsrichtung des Messrollenkörpers keine Ausnehmung aufweisen, so kann zwar ein ähnlicher oder identischer Schichtauftrag über dem Messrollenkörper wie über der Ausnehmung aufgebracht sein, aber es kann auch für Bereiche ohne Ausnehmung vorgesehen sein, dass eine, insbesondere der Dicke des Schichtauftrags entsprechende, Umhüllung auf dem Messrollenkörper angeordnet und mit diesem verbunden ist.

Die Erfindung schafft auch ein Verfahren zum Herstellen einer Messrolle zum Feststellen einer Eigenschaft eines über die Messrolle geführten bandförmigen Guts, insbesondere von Metallband. Das Verfahren weist die folgenden Schritte auf: Bereitstellen eines Messrollenkörpers mit einer Umfangsfläche, Bereitstellen mindestens einer Ausnehmung in dem Messrollenkörper, die von einer Umfangsfläche des Messrollenkörpers zugänglich ist, wobei unter einem Bereitstellen einer Ausnehmung auch ein Ausbilden einer Ausnehmung in dem Messrollenkörper erfasst ist, und Verspannen eines Kraftsensors in der Ausnehmung mittels einer Abdeckung. Das Verfahren umfasst ferner den Schritt eines Ausbildens eines Schichtauftrags über der Ausnehmung und/oder der Abdeckung.

In einer bevorzugten Ausführungsform wird der Schichtauftrag über der Ausnehmung und/oder der Abdeckung mittels 3D-Druckens, Laserstrahlschmelzens, Elektrodenstrahlschmelzens, Laser-Puderauftragsschweißens und/oder Lichtbogenschweißens mit Drahtvorschub gebildet.

In einer bevorzugten Ausführungsform wird die erste Schicht des Schichtauftrags mit dem Messrollenkörper verschweißt. Hierdurch wird eine besonders stabile Verbindung des Schichtauftrages und/oder der Abdeckung gebildet.

In einer bevorzugten Ausführungsform wird zum Ausbilden des Schichtauftrags ein 3D-Modell verwendet, mit dem gezielt eine dreidimensionale Erzeugung einer Schicht bzw. mehrerer Schichten auf dem Messrollenkörper möglich ist. Eine besonders genaue additive Fertigung ist möglich. Beispielsweise kann mittels eines 3D-Modells die Höhe des Schichtauftrags variabel gestaltet sein. Mittels einer Steuereinrichtung, die das 3D-Modell berücksichtigt, kann das Aufbringen bzw. Ausbilden des Schichtauftrags gesteuert werden. Die Dicke des Schichtauftrags kann ebenso wie die Zusammensetzung des Schichtauftrags mittels der Steuerung beim Ausbilden berücksichtigt werden. Beispielsweise sind Dicken des Schichtauftrags von 10 Mikrometer bis 10 Millimeter möglich. Anforderungen von Nutzern an die Messrolle können berücksichtigt werden. Vorgaben der Nutzer der Messrolle können mittels einer Eingabe eingegeben und von der Steuerung umgesetzt werden. Insbesondere bevorzugt wird der Schichtauftrag im Hinblick auf die Festigkeit, Zähigkeit, Verschleißfestigkeit und Korrosionsbeständigkeit ausgewählt.

In einer bevorzugten Ausführungsform wird für den Schichtauftrag der gleiche Werkstoff verwendet, wie er für den Messrollenkörper verwendet wird. Aufgrund der Materialidentität zwischen dem Messrollenkörper und dem Schichtauftrag kann die Messrolle zumindest teilweise als Vollrolle angesehen werden. Die Einschränkung beruht teilweise darauf, dass der Schichtauftrag zusätzlich zu dem Schichtauftrag aus dem gleichen Werkstoff wie der Messrollenkörper weitere Werkstoffe oberhalb dieser Schichten aufweisen kann.

In einer bevorzugten Ausführungsform werden für den Schichtauftrag unterschiedliche Werkstoffe verwendet, die insbesondere über der Dicke des Schichtauftrags variieren können. Eine Bildung von Schichten, wobei unterschiedliche Werkstoffe für ein und dieselbe Schicht verwendet werden können, ist möglich. Die Werkstoffe können für die Ausbildung einer Schicht des Schichtauftrags im gleichen Schritt erschmolzen werden und auf den Messrollenkörper bzw. schon vorher aufgebrachte Schichten des Schichtauftrags aufgebracht werden. Unterschiedlichen Anforderungen kann hierdurch begegnet werden. Ein möglichst automatisiertes Verfahren zum Herstellen einer Messrolle ist hierdurch möglich, indem beispielsweise aus unterschiedlichen Magazinen bzw. Bevorratungsbehältern Werkstoffe der Aufbringvorrichtung zugeführt werden.

In einer bevorzugten Ausführungsform wird der Schichtauftrag zumindest in einer Richtung über der Ausnehmung spaltlos ausgebildet, so dass im Wesentlichen in einer Richtung keine Partikel bzw. Schmutz in die Ausnehmung bzw. in den zwischen Abdeckung und Ausnehmungswand ausgebildeten Spalt gelangen kann. In einer bevorzugten Ausführungsform wird der Schichtauftrag gesamthaft ohne einen Spalt über der Ausnehmung ausgebildet.

Die Erfindung schafft auch eine Verwendung einer Messrolle, wie sie vorstehend beschrieben ist, zur Feststellung einer Eigenschaft eines über die Messrolle geführten bandförmigen Guts, insbesondere von Metallband, wobei insbesondere die Planheit des bandförmigen Guts festgestellt wird.

Sofern im Rahmen der Beschreibung Zahlenangaben angegeben werden, so werden hierunter die spezifische Zahlenangabe beinhaltende Bereiche umfasst, die durch eine 10 %-ige Toleranz nach oben und nach unten vom jeweiligen angegebenen Zahlenwert begrenzt sind. Die dem spezifischen Zahlenwert zukommende Bedeutung einer Bereichsangabe trägt den Fertigungstoleranzen und/oder der Messgenauigkeit der jeweiligen zugrundeliegenden Größe Rechnung. Die konkret angegebenen Zahlenwerte versteht der Fachmann daher als ungefähre Angaben, die im Wesentlichen den Zahlenwert im Bereich natürlicher Schwankungen bzw. Herstellungsschwankungen entsprechen.

Der Begriff "aufweisen" im Sinne der Beschreibung umfasst sowohl den Bedeutungsinhalt "aufweisen", dem angegebenen Element noch weitere Elemente Vorhandensein können, so dass neben dem angegebenen Element noch weitere Elemente vorgesehen sein können. Der Begriff "aufweisen" erfasst aber auch im Sinne der Beschreibung eine abschließende Begrifflichkeit im Sinne einer Bedeutung von "bestehen aus".

Die Erfindung wird nachfolgend anhand mehrerer in den Zeichnungen dargestellten Ausführungsbeispielen näher erläutert.

In den Zeichnungen zeigt:
- Fig. 1: eine Messrolle, bei der Kraftsensoren ohne Abstand voneinander in einer Ausnehmung in Längsrichtung der Messrolle angeordnet sind;
- Fig. 2: eine Messrolle, bei der Kraftsensoren in jeweiligen Ausnehmungen versetzt zueinander angeordnet sind;
- Fig. 3: eine Messrolle, bei der mehrere Kraftsensoren in jeweiligen Ausnehmungen versetzt zueinander angeordnet sind;
- Fig. 4.: eine Messrolle, bei der jeweils ein Kraftsensor in einer Ausnehmung angeordnet ist, und mehrere Kraftsensoren versetzt zueinander angeordnet sind;
- Fig. 5: eine Messrolle, bei der mehrere Kraftsensoren in einer Ausnehmung versetzt zueinander angeordnet sind und mehrere Ausnehmungen mit mehreren Kraftsensoren vorgesehen sind;
- Fig. 6: eine Messrolle, bei der Kraftsensoren ohne Abstand voneinander in einer Ausnehmung in Längsrichtung der Messrolle angeordnet sind und
- Fig. 7: einen Ausschnitt einer Messrolle mit einer Ausnehmung und einer Schicht eines Schichtaufbaus mit einem Vorsprung in einer geschnittenen Seitenansicht.

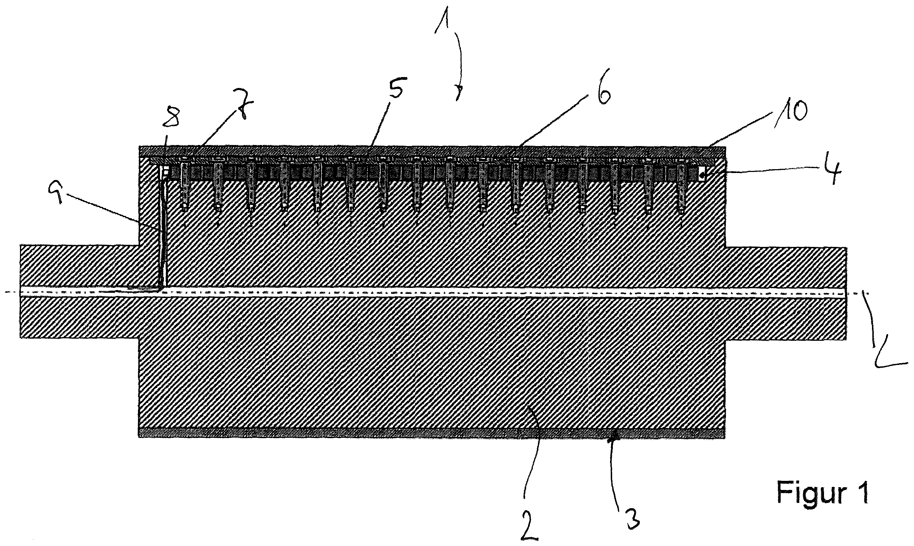

Figur 1 zeigt in einer schematischen Schnittdarstellung eine Messrolle 1. Die Messrolle 1 ist zum Feststellen einer Eigenschaft eines über die Messrolle 1 geführten bandförmigen Guts, welches nicht dargestellt ist, ausgestaltet. Die Messrolle 1 weist einen Messrollenkörper 2 mit einer Umfangsfläche 3 auf.

Ferner ist eine Ausnehmung 4 in dem Messrollenkörper 2 vorgesehen, die von der Umfangsfläche 3 des Messrollenkörpers 2 zugänglich ist. Mehrere Kraftsensoren 5 sind in der Ausnehmung 4 angeordnet. Die Ausnehmung 4 ist hierzu als linienförmige, radial ausgerichtete Ausnehmung ausgebildet, die entlang der Erstreckung in der Längsachse L des Messrollenkörpers 2 bzw. der Messrolle 1 im Wesentlichen die gleiche Tiefe aufweist.

Es ist eine einstückige Abdeckung 6 vorgesehen, mittels derer die Kraftsensoren 5 in der Ausnehmung 4 mittels Spannschrauben 7 verspannt sind. Über der Abdeckung 6 bzw. der Ausnehmung 4 und Teilen des Messrollenkörpers 2 (im Bereich der Stirnseiten) ist ein Schichtauftrag 10 ausgebildet.

Zur Kontaktierung der Kraftsensoren 5 ist ein radial verlaufender Kabelkanal 8 mit einem darin geführten Kabel 9 vorgesehen, welches die Kraftsensoren 5 mit einer Messelektronik funktional verbindet.

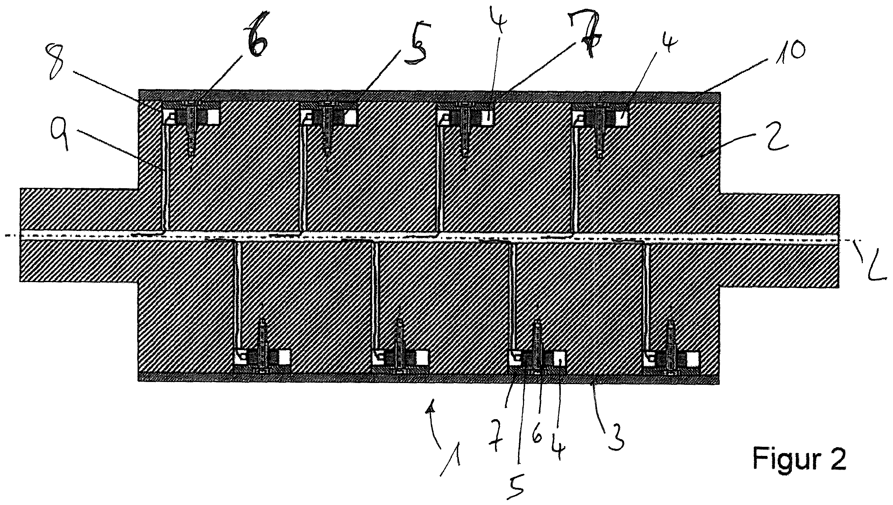

In Figur 2 ist eine schematische Darstellung einer Messrolle entlang der Längsachse L der Messrolle 1 bzw. des Messrollenkörpers 2 gezeigt. Die in dieser Ausführungsform der Messrolle 1 vorgesehenen Ausnehmungen 4 sind sowohl entlang der Längsachse L als auch radial zueinander versetzt ausgebildete Bohrungen, wobei je ein Kraftsensor 5 in einer jeweiligen Ausnehmung 4 vorliegt. Die Kraftsensoren 5 sind mittels einer Spannschraube 7 in der jeweiligen Ausnehmung 4 verspannt. Über der Ausnehmung 4 und der Abdeckung 6 ist ein Schichtauftrag 10 ausgebildet.

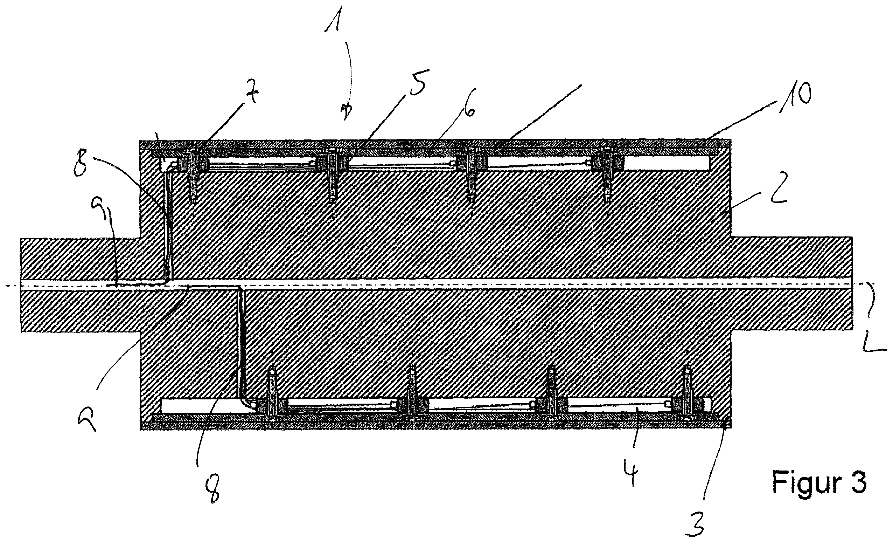

Die Figur 3 zeigt ein weiteres Ausführungsbeispiel einer Messrolle 1, bei der die Kraftsensoren 5 zumindest teilweise in einer gemeinsamen Ausnehmung 4 angeordnet sind. Die Kraftsensoren 5 sind an der Umfangsfläche 3 des Messrollenkörpers 2 in radial eingearbeiteten Nuten, die die Ausnehmungen 4 bilden, angeordnet. In den Ausnehmungen 4 sind die Kraftsensoren 5 mittels einer Abdeckung 6 und Spannschrauben 7 verspannt. Über der Ausnehmung 4 und der Abdeckung 6 ist ein Schichtauftrag 10 ausgebildet.

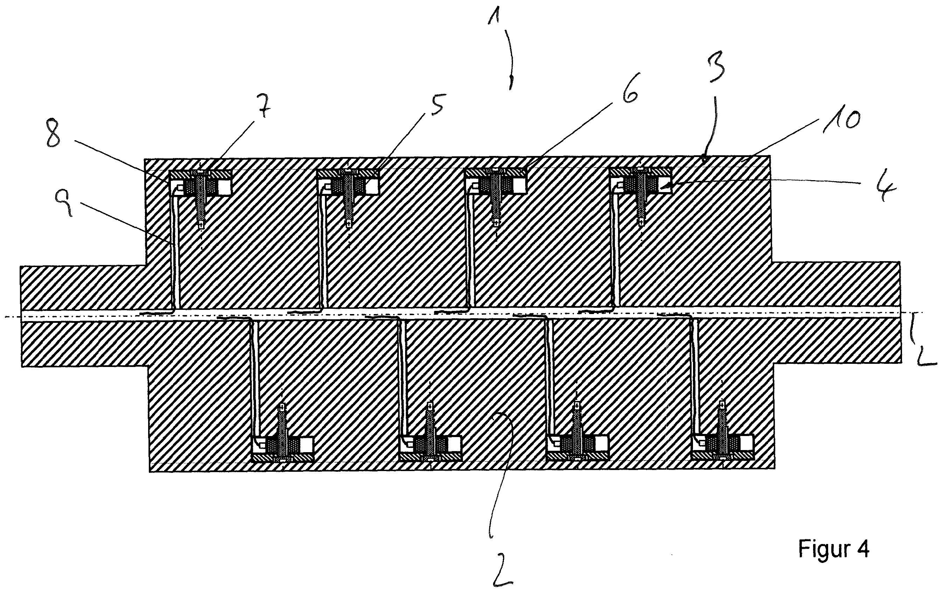

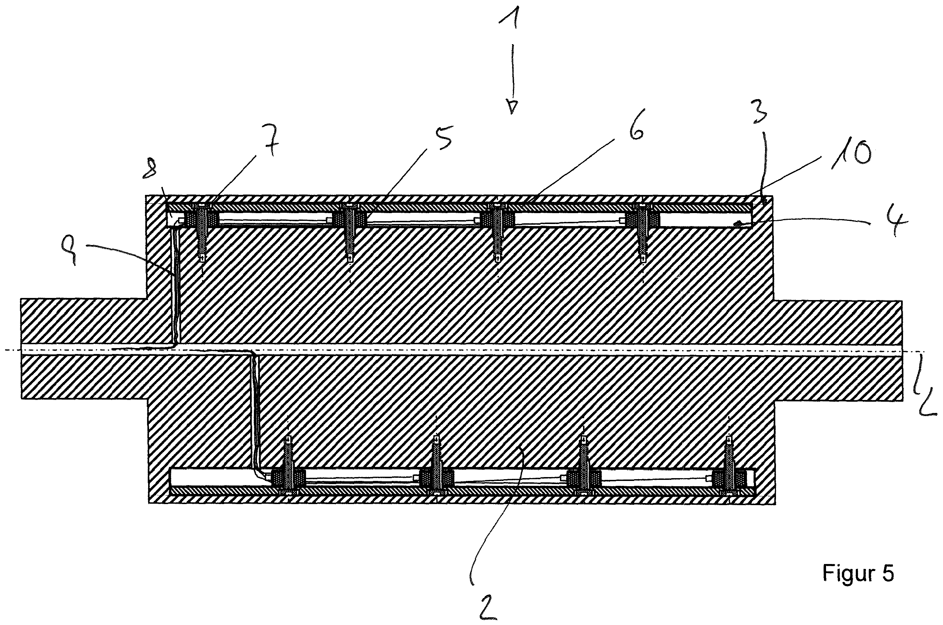

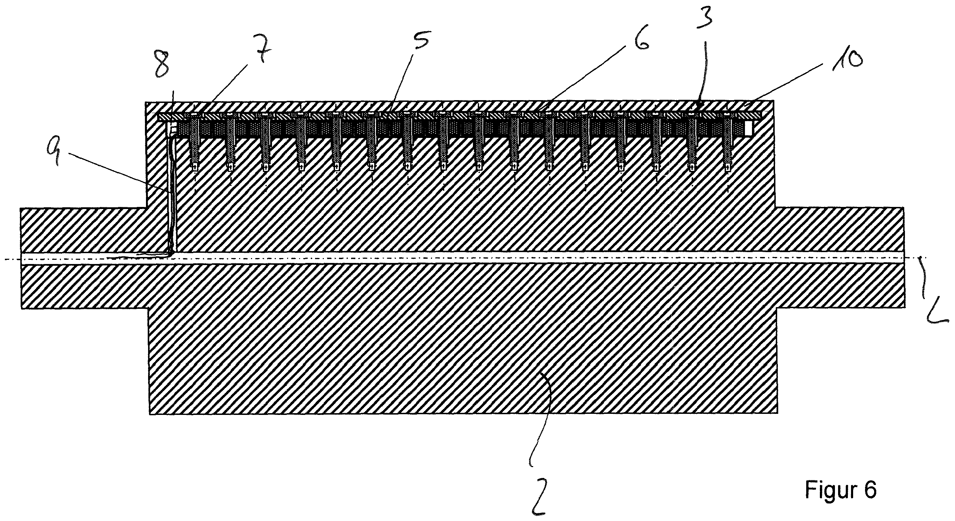

Die Figuren 4 bis 6 zeigen weitere Ausführungsbeispiele, die sich im Wesentlichen von den Ausführungsformen der Figuren 1 bis 3 dadurch unterscheiden, dass für den Schichtauftrag 10 der Ausführungsbeispiele der Figuren 4 bis 6 derselbe Werkstoff für den Schichtauftrag 10 verwendet wird wie für den Messrollenkörper 2. In den Figuren 4 bis 6 sind Linien eingebracht, die die Grenze zwischen Messrollenkörper 2 und Schichtauftrag 10 symbolisieren, wobei durch die Verwendung desselben Materials wie das Material des Messrollenkörpers 2, keine scharfe Grenze zwischen Messrollenkörper 2 und Schichtauftrag 10 vorliegt.

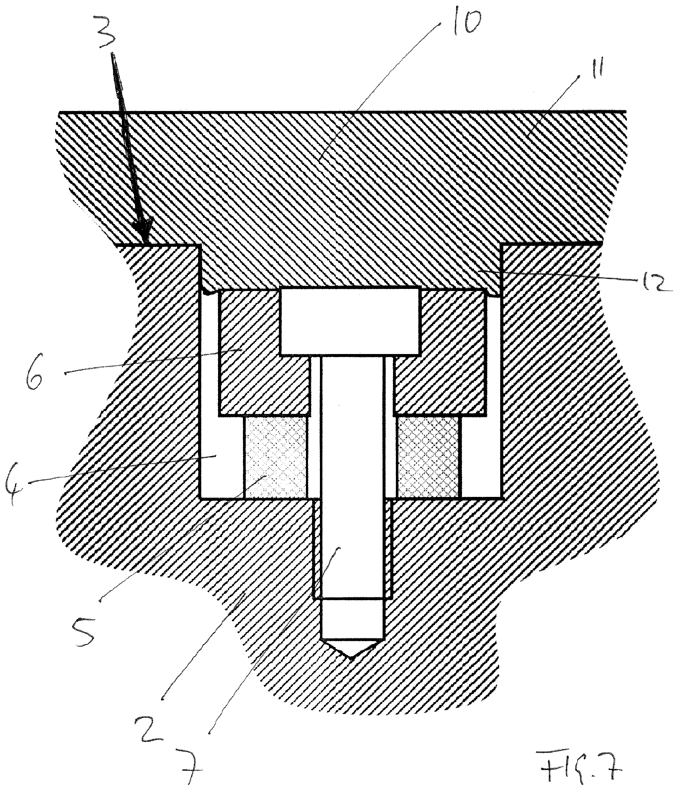

Fig. 7 zeigt eine Ausführungsform, bei der in der Ausnehmung 4 eines Messrollenkörpers 2 ein Kraftsensor 5 angeordnet ist. In der Ausnehmung 4 ist ferner eine Abdeckung 6 vorgesehen, die mittels einer Spannschraube 7 mit dem Messrollenkörper 2 verschraubt ist und den Kraftsensor 5 vorspannt. Der auf die Umfangsfläche 3 des Messrollenkörpers 2 aufgebaute Schichtauftrag 10 weist eine (einzige) Schicht 11 auf. Diese Schicht 11 hat eine sich über die Erstreckung der Schicht 11 ändernde Schichtstärke. So weist die Schicht 11 einen Vorsprung 12 auf. Die Abdeckung 6 ist in der Ausnehmung 4 zurückgesetzt angeordnet. Mit dem Vorsprung 12 wird der verbleibende Raum oberhalb der Abdeckung 6 in der Ausnehmung 4 gefüllt. Die Schicht 11 hat somit im Bereich der übrigen Umfangsfläche 3 des Messrollenkörpers 2 eine konstante Dicke, hat aber im Bereich der Ausnehmung 4 einen Vorsprung 12 (eine erhöhte Schichtdicke), um den verbleibenden Raum der Ausnehmung 4 oberhalb der Abdeckung 6 abzudecken. Es ist denkbar, dass auf die gezeigte (erste) Schicht 11 des Schichtaufbaus noch eine oder weitere (nicht dargestellte) Schichten aufgetragen werden.

## Patentansprüche

1. Messrolle (1) zum Feststellen einer Eigenschaft eines über die Messrolle geführten bandförmigen Guts, insbesondere von Metallband, mit
- einem Messrollenkörper (2) mit einer Umfangsfläche (3),
- mindestens einer Ausnehmung (4) in dem Messrollenkörper (2),
- einem Kraftsensor (5), der in der Ausnehmung (4) angeordnet ist,
bei der über der Ausnehmung (4) ein Schichtauftrag (10) ausgebildet ist, **dadurch gekennzeichnet, dass** der Schichtauftrag (10) mittels des Extremhochgeschwindigkeitslaserauftragsschweißens (EHLA) erzeugt wurde.

2. Messrolle (1) nach Anspruch 1, **gekennzeichnet durch** eine Abdeckung (6), mittels derer der Kraftsensor (5) in der Ausnehmung (4) verspannt ist, wobei der Schichtauftrag (10) über der Abdeckung (6) ausgebildet ist.

3. Messrolle (1) nach einem der Ansprüche 1 oder 2, **dadurch gekennzeichnet, dass** der Messrollenkörper (2) durch einen Schichtauftrag (10) hergestellt wurde.

4. Messrolle (1) nach einem der Ansprüche 1 bis 3, **dadurch gekennzeichnet, dass** die erste Schicht des Schichtauftrags (10) mit dem Messrollenkörper (2) und/oder der Abdeckung (6) verschweißt ist.

5. Messrolle (1) nach einem der Ansprüche 1 bis 4, **dadurch gekennzeichnet, dass** zumindest einige der Schichten des Schichtauftrags (10) miteinander verschweißt sind.

6. Messrolle (1) nach einem der Ansprüche 1 bis 5, **dadurch gekennzeichnet, dass** der Schichtauftrag (10) mindestens ein schweißgeeignetes Metall, mindestens eine schweißgeeignete Legierung und/oder keramische Verstärkungspartikel aufweist.

7. Messrolle (1) nach einem der Ansprüche 1 bis 6, **dadurch gekennzeichnet, dass** der Schichtauftrag (10) Schichten unterschiedlicher Zusammensetzung übereinander aufweist.

8. Messrolle (1) nach einem der Ansprüche 1 bis 7, **dadurch gekennzeichnet, dass** der Schichtauftrag (10) über der Abdeckung (6) spaltlos zumindest in einer Richtung über der Ausnehmung (4) ausgebildet ist.

9. Messrolle (1) nach einem der Ansprüche 1 bis 8, **dadurch gekennzeichnet, dass** in Längsrichtung oder quer zur Längsrichtung des Messrollenkörpers (2) auf dem Messrollenkörper (2) mehrere unterschiedliche Schichtaufträge (10) und/oder Umhüllungen vorliegen.

10. Verfahren zum Herstellen einer Messrolle (1) nach einem der Ansprüche 1 bis 9 aufweisend die Schritte:
- Bereitstellen eines Messrollenkörpers (2) mit einer Umfangsfläche (3),
- Bereitstellen mindestens einer Ausnehmung (4) in dem Messrollenkörper (2), die von einer Umfangsfläche (3) des Messrollenkörpers (2) zugänglich ist, und
Ausbilden eines Schichtauftrags (10) über der Ausnehmung (4) und der Abdeckung (6), **gekennzeichnet durch** Ausbilden des Schichtauftrags (10) über der Ausnehmung (4) und/oder der Abdeckung (6) mittels des Extremhochgeschwindigkeitslaserauftragsschweißens (EHLA).

11. Verfahren nach Anspruch 10, **gekennzeichnet durch** das Verspannen eines Kraftsensors (5) in der Ausnehmung (4) mittels einer Abdeckung (6) und das Ausbilden eines Schichtauftrags (10) über der Ausnehmung (4) und der Abdeckung (6).

12. Verfahren nach einem der Ansprüche 10 bis 11, **gekennzeichnet durch** Verschweißen der ersten Schicht des Schichtauftrags (10) mit dem Messrollenkörper (2) und/oder der Abdeckung (6).

13. Verfahren nach einem der Ansprüche 10 bis 12, **gekennzeichnet durch** Verwenden eines 3D-Modells zum Ausbilden des Schichtauftrags (10).

14. Verfahren nach einem der Ansprüche 10 bis 13, **gekennzeichnet durch** Verwenden unterschiedlicher Werkstoffe für den Schichtauftrag (10).

15. Verfahren nach einem der Ansprüche 10 bis 14, **gekennzeichnet durch** spaltloses Ausbilden des Schichtauftrags (10) zumindest in einer Richtung über der Ausnehmung (4).

16. Verwendung einer Messrolle (1) nach einem der Ansprüche 1 bis 9 zur Feststellung einer Eigenschaft eines über die Messrolle (1) geführten bandförmigen Guts, insbesondere von Metallband, insbesondere zum Feststellen der Planheit des bandförmigen Guts.

## Claims

1. Measuring roller (1) for determining a property of a strip-type product, in particular a metal strip, guided over the measuring roller, comprising
- a measuring roller body (2) having a circumferential surface (3),
- at least one recess (4) in the measuring roller body (2),
- a force sensor (5) which is arranged in the recess (4),
wherein a coating layer (10) is applied over the recess (4) **characterized in that** the coating layer (10) is generated by extreme high speed laser application (EHLA).

2. Measuring roller (1) according to claim 1, **characterized by** a cover (6), by means of which the force sensor (5) is braced in the recess (4), wherein the coating layer (10) is formed over the cover (6).

3. Measuring roller (1) in accordance with one of the claims 1 or 2, **characterized in that** the measuring roller body (2) is produced by a coating layer (10).

4. Measuring roller (1) in accordance with one of the claims 1 to 3, **characterized in that** the first layer of the coating layer (10) is welded to the measuring roller body (2) and/or the cover (6).

5. Measuring roller (1) in accordance with one of the claims 1 to 4, **characterized in that** at least some of the layers of the coating layer (10) are welded together.

6. Measuring roller (1) in accordance with one of the claims 1 to 5, **characterized in that** the coating layer (10) comprises at least one weldable metal, at least one weldable alloy and/or ceramic reinforcing particles.

7. Measuring roller (1) in accordance with one of the claims 1 to 6, **characterized in that** the coating layer (10) comprises layers of different composition on top of each other.

8. Measuring roller (1) in accordance with one of the claims 1 to 7, **characterized in that** the coating layer (10) is formed over the cover (6) over the recess (4) without a gap in at least in one direction.

9. Measuring roller (1) in accordance with one of the claims 1 to 8, **characterized in that** a plurality of different coating layers (10) and/or envelopes are provided in the longitudinal direction or transverse to the longitudinal direction of the measuring roller body (2) on the measuring roller body (2).

10. Method for producing a measuring roller (1) in accordance with one of the claims 1 to 9 comprising the steps:
- providing a measuring roller body (2) with a peripheral surface (3),
- providing at least one recess (4) in the measuring roller body (2), which is accessible from a peripheral surface (3) of the measuring roller body (2), and
forming a coating layer (10) over the recess (4) and the cover (6), **characterized by** forming the coating layer (10) over the recess (4) and/or the cover (6) by means of extreme high speed laser application (EHLA).

11. Method in accordance with claim 10, **characterized by** bracing of a force sensor (5) in the recess (4) by means of a cover (6) and forming a coating layer (10) over the recess (4) and the cover (6).

12. Method in accordance with one of the claims 10 to 11, **characterized by** welding the first layer of the coating layers (10) to the measuring roller body (2) and/or the cover (6).

13. Method in accordance with one of the claims 10 to 12, **characterized by** the use of a 3D model for forming the coating layer (10).

14. Method in accordance with one of the claims 10 to 13, **characterized by** the use of different materials for the coating layer (10).

15. Method in accordance with one of the claims 10 to 14, **characterized by** forming coating layer (10) gaplessly at least in one direction over the recess (4).

16. Use of a measuring roller (1) in accordance with one of the claims 1 to 9 to determine a property of a strip-type product, in particular a metal strip, guided over the measuring roller (1), particularly for determining the flatness of the strip-type product.

## Revendications

1. Rouleau de mesure (1) pour déterminer une propriété d'un produit en forme de bande, en particulier d'une bande métallique, guidé sur le rouleau de mesure, avec
- un corps de rouleau de mesure (2) avec une surface périphérique (3),
- au moins un évidement (4) dans le corps du rouleau de mesure (2),
- un capteur de force (5) disposé dans l'évidement (4),
dans lequel une application de couche (10) est formée au-dessus de l'évidement (4), **caractérisé en ce que** l'application de couches (10) a été produite au moyen du rechargement par soudage laser à vitesse extrêmement élevée (EHLA).

2. Rouleau de mesure (1) selon la revendication 1, **caractérisé par** un couvercle (6) au moyen duquel le capteur de force (5) est serré dans l'évidement (4), l'application de couches (10) étant formée au-dessus du couvercle (6).

3. Rouleau de mesure (1) selon l'une des revendications 1 ou 2, **caractérisé en ce que** le corps du rouleau de mesure (2) a été fabriqué par application d'une couches (10).

4. Rouleau de mesure (1) selon l'une des revendications 1 à 3, **caractérisé en ce que** la première couche de l'application de couches (10) est soudée au corps du rouleau de mesure (2) et/ou au couvercle (6).

5. Rouleau de mesure (1) selon l'une des revendications 1 à 4, **caractérisé en ce qu'au** moins certaines des couches de l'application de couches (10) sont soudées entre elles.

6. Rouleau de mesure (1) selon l'une des revendications 1 à 5, **caractérisé en ce que** l'application de couches (10) comprend au moins un métal apte au soudage, au moins un alliage apte au soudage et/ou des particules de renforcement céramiques.

7. Rouleau de mesure (1) selon l'une des revendications 1 à 6, **caractérisé en ce que** l'application de couches (10) présente des couches de composition différente les unes au-dessus des autres.

8. Rouleau de mesure (1) selon l'une des revendications 1 à 7, **caractérisé en ce que** l'application de couches (10) au-dessus du couvercle (6) est réalisé sans fente au moins dans une direction au-dessus de l'évidement (4).

9. Rouleau de mesure (1) selon l'une des revendications 1 à 8, **caractérisé en ce que** plusieurs applications de couches (10) et/ou enveloppes différentes sont présentes sur le corps de rouleau de mesure (2) dans le sens longitudinal ou transversalement au sens longitudinal du corps de rouleau de mesure (2).

10. Procédé de fabrication d'un rouleau de mesure (1) selon l'une des revendications 1 à 9, comprenant les étapes de :
- fourniture d'un corps de rouleau de mesure (2) avec une surface périphérique (3),
- fourniture d'au moins un évidement (4) dans le corps de rouleau de mesure (2), qui est accessible depuis une surface périphérique (3) du corps de rouleau de mesure (2), et
formation d'une application de couches (10) sur l'évidement (4) et le couvercle (6), **caractérisée par** la formation d'une application de couches (10) sur l'évidement (4) et/ou le couvercle (6) au moyen du rechargement par soudage laser à vitesse extrêmement élevée (EHLA).

11. Procédé selon la revendication 10, **caractérisé par** le serrage d'un capteur de force (5) dans l'évidement (4) au moyen d'un couvercle (6) et la formation d'une application de couches (10) sur l'évidement (4) et le couvercle (6).

12. Procédé selon l'une des revendications 10 à 11, **caractérisé par** le soudage de la première couche de l'application de couches (10) avec le corps de rouleau de mesure (2) et/ou le couvercle (6).

13. Procédé selon l'une des revendications 10 à 12, **caractérisé par** l'utilisation d'un modèle 3D pour former l'application de couches (10).

14. Procédé selon l'une des revendications 10 à 13, **caractérisé par** l'utilisation de différents matériaux pour l'application de la couches (10).

15. Procédé selon l'une des revendications 10 à 14, **caractérisé par** la formation sans fente de l'application de couches (10) au moins dans une direction au-dessus de l'évidement (4).

16. Utilisation d'un rouleau de mesure (1) selon l'une des revendications 1 à 9 pour déterminer une propriété d'un produit en forme de bande, en particulier de bande métallique, guidé sur le rouleau de mesure (1), en particulier pour déterminer la planéité du produit en forme de bande.
